# EUROPEAN PATENT APPLICATION

(11) **EP 1 381 197 A1**
(43) Date of publication of application: **14.01.2004**
(21) Application number: 02015203.9
(22) Date of filing: 08.07.2002
(51) Int. Cl.: H04L 29/06

(54) **Method of supplying location-based services**

(71) Applicant: Sony International (Europe) GmbH, 10785 Berlin (DE)
(72) Inventor: Müller, Gil, Advanced Technology Center Stuttgart, 70327 Stuttgart (DE)
(74) Representative: Müller - Hoffmann & Partner

(57) **Abstract**

A method of supplying location-based services/information offered by corresponding servers (5₁ to 5ₙ) to a client (2) which is connected to said servers (5₁ to 5ₙ) via a communication network (4), comprises the following steps: The client (2) maps a location to at least one network address respectively associated with a part of said communication network (4) and sends a service/information request to said parts of said communication network (4) specified by said at least one network address, wherein all of said servers (5₁ to 5ₙ) which are accessible via said at least one network address process said service/information request and send corresponding location-based services/information back to said client.

## Description

The invention relates to a method of supplying location-based services/information offered by servers to a client.

In recent years, the use of mobile computing devices like mobile phones, portable computers, navigation systems or handhelds has become common. Most of said mobile computing devices show network capabilities which means that they can receive/send information from/to remote computing devices via a communication network. For example, it is possible to connect portable computers to the Internet in order to exchange information between said portable computers and information providing internet servers.

Network capabilities in particular enable to effectively provide location based services to mobile computing devices. Location based services/information are services/information which are related to a specific location. If a user of a handheld wants to know for example where the next bakery is located, he may send a bakery service/information request including his geographical position via the Internet to an internet server which then processes the bakery service/information request in order to supply corresponding information about surrounding bakeries via the Internet back to the handheld. The supplied information may then be visualized on the handheld in order to enable the user a selection of a bakery.

Above-described method of providing location-based services/information shows the drawback that an association between the geographical position of the handheld and the corresponding Internet servers providing the desired location based information has to be managed by an own computing device (usually a dedicated server being located within the Internet which maps the geographical position to corresponding Internet servers).

It is an object of the present invention to provide a method of supplying location-based services/information which only needs a minimum of hardware/software requirements in order to be performed and which shows a good scalability.

In order to solve this object, the present invention provides a method of supplying location-based services/information according to claim 1. Further, the invention provides a network capable client according to claim 10 as well as a communication system for handling location-based services/information according to claim 12. Further preferred embodiments and features of the present invention are defined in respective subclaims, respectively. Last, a computer program product and a computer readable storage means according to claims 13 and 14 are provided, respectively.

According to the present invention, a method of supplying location-based services/information offered by corresponding servers to a client which is connectable to said servers via a communication network comprises the following steps:
- the client a) maps a location to at least one network address respectively associated with a part of the communication network, and b) sends a service/information request to the parts of the communication network specified by the at least one network address, wherein
- all of the servers which are accessible via the at least one network address process the service/information request and send corresponding location-based services/information back to the client.

The above-described method has the advantage that no additional hardware like a middle server is needed in order to associate a location with corresponding servers providing the desired services/information. Instead, the association is done within the client itself. The client can direct its service/information request directly to the network addresses obtained during the mapping process.

The association of a location with corresponding network addresses/servers providing the desired services/information maybe statically performed within the client according to static information like a fixed association table which assigns to each location several network addresses/servers. This association table may for example be realized as downloadable file which can be input and processed by the client. Alternatively, a common algorithm may be used which unically associates network addresses with geographical locations/areas. If this common algorithm is both used by the client and during an assigning process which assigns network addresses to servers providing the location based services, the client can directly address the servers in a unique manner without using any external information. In other words, all information needed to address the servers is contained within the algorithm itself. A third possibility is to dynamically assign locations to network addresses. In this case a client performing a mapping could contact an external server to do the actual mapping or the network connection could be used for active updates. This means that the management entity for this mapping service may update the table or algorithm whenever it likes, e.g. dependent on the network traffic.

The term "location" may mean an exact geographical position (a geographical point) and/or a geographical area and/or a set of geographical areas. The second and third alternative enables a user of the client to address also services associated with a complete area (for example all bakeries being located within a specific town).

In a preferred embodiment, the term "location" is associated with the current location of the client itself which may for example be obtained by a user input and/or by processing an output of a positioning device like a GPS system.

The term "client" may be any mobile or stationary communication device/software application. The same holds true for the term "server".

Preferably, each network address represents a single node or a group of nodes of the communication network. To each node one or more servers may be connected. As a consequence, one single server or a group of servers can be addressed via a single network address. If a service/information request is sent to a node which is associated with several servers, the service/information request is distributed to each of said servers, wherein each server independently processes the respective request. Each server may then send corresponding services/information back to the client.

At least one of said network addresses obtained during the mapping process of step a) may correspond to a single node of the communication network, wherein a unicasting communication process can than be performed during step b) via the network address corresponding to said single node. Further, at least one of said network addresses obtained during the mapping process of step a) may correspond to a group of nodes of said communication network, wherein a multicasting communication process can then be performed during step b) via the network address corresponding to the group of nodes. Further, at least one of said network addresses obtained during the mapping process of step a) may correspond to a group of nodes of the communication network, wherein a anycasting communication process can then be performed during step b) via the network address corresponding to said group of nodes.

In a preferred embodiment, step a) comprises a first step of mapping the location to an element of an abstracted discrete location space, and a second step of mapping said element to the at least one network address. The use of an abstracted discrete location space enables a more flexible association between network addresses and geographical locations.

As already indicated, the communication network preferably comprises the Internet. In this case, the network addresses are given by IP-addresses. However, the above-described method may also be used in conjunction with any other type of communication networks.

The services may comprise "pure" information and/or computer executable code like JAVA-code which can then be executed on the clients itself. For example, a service may be constituted by a navigation application which interactively guides the user of the client to a desired bakery.

The invention further provides a network capable client comprising means for:
- mapping a location to at least one network address respectively associated with a part of a communication network to which the client is connectable,
- sending a service/information request to the parts of the communication network specified by the at least one network address,
- receiving requested services/information via the communication network.

The above-mentioned sending/receiving means may for example be constituted by a network adapter. The network capable client preferably comprises positioning means and/or position input means for supplying the client with location information. The positioning means may for example be a GPS system connected to the client, whereas the position input means may for example be constituted by a man machine interface of the client.

The invention further provides a communication system for handling location-based services/information, comprising:
- a network capable client according to the present invention,
- at least one server which processes service/information requests and provides corresponding services/information,
- a communication network connecting the network capable client to the at least one server, wherein the servers are addressable by the network capable client via the network addresses being determined by the mapping process executed within the network capable client.

The invention further provides a computer program product comprising computer program means adapted to perform and/or embody the inventive method and/or any step thereof when it is executed on a computer, a digital signal processor or the like.

Last, the invention provides a computer readable storage means adapted to store the computer program product according to the present invention.

Further features, embodiments and advantages of the present invention will become more apparent in the following description while making reference to the accompanying drawings, wherein:
**Fig. 1** shows a preferred embodiment of a communication system according to the present invention;
**Fig. 2** shows a preferred embodiment of a service/information supplying process according to the present invention;
**Fig. 3** shows a preferred embodiment of a server usable in conjunction with the present invention.

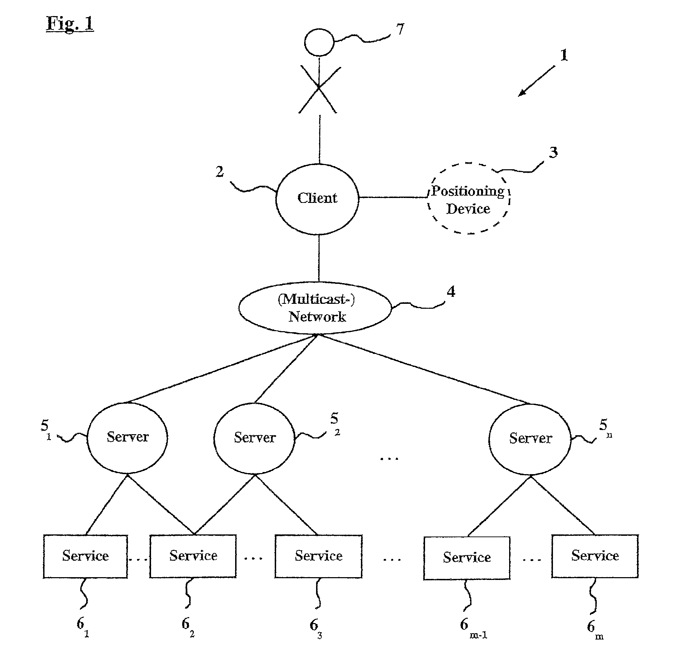

According to Fig. 1, a preferred embodiment of an inventive communication system 1 comprises a network capable client 2, a positioning device 3, a communication network 4, and a first to n-th server 5ₗ to 5ₙ. The client 2 may include the position device 3 or may be connectable to it on demand. The client 2 is connected to the first to n-th servers 5ₗ to 5ₙ via the communication network 4, wherein each server 5ₗ to 5ₙ offers at least one service 6ₗ to 6ₘ to the client 2.

A user 7 of the client 2 may for example instruct the client 2 to look for the next bakery within the surrounding area (surrounding area corresponds to the term "location") in a first step. This request is then mapped within the client 2 to a network address in a second step. In a third step, a bakery service/information request is sent to the corresponding network address via the communication network 4 and distributed to all servers 5ₗ to 5ₙ which are associated with said network address (in this case it is assumed that all servers 5ₗ to 5ₙ are associated with said network address, respectively). Each of the servers 5ₗ to 5ₙ (if they are all activated) processes the same request in a fourth step and sends in a fifth step corresponding bakery services/information via the communication network 4 back to the client 2. Of course, each server 5ₗ to 5ₙ can only provide services/information in the case that respective software packets for processing respective requests are installed within the servers 5ₗ to 5ₙ. The bakery services/information sent by the servers 5ₗ to 5ₙ are collected by the client 2 and presented to the user in a sixth step. The user then may execute received services on the client in a seventh step. Alternatively, the server 5ₗ to 5ₙ may only transmit information about the services 6ₗ to 6ₘ (e.g. a service list) to the client 2 during said fifth step. In this case, the user 7 may then use this information in order to activate the corresponding services 6ₗ to 6ₘ in an eighth step resulting in a downloading process of the services 6ₗ to 6ₘ to the client 2 or in a service execution process being performed on the servers 5ₗ to 5ₙ themselves.

As has become apparent, the client 2 looks for services 6ₗ to 6ₘ at a certain location and the servers 5ₗ to 5ₙ provide the services 6ₗ to 6ₘ. A communication network 4 enables multiplexing so that multiple clients can issue requests at the same time and likewise multiple servers 5₁ to 5ₙ can offer their services 6ₗ to 6ₘ. It was assumed that the communication network 4 has multicasting capabilities.

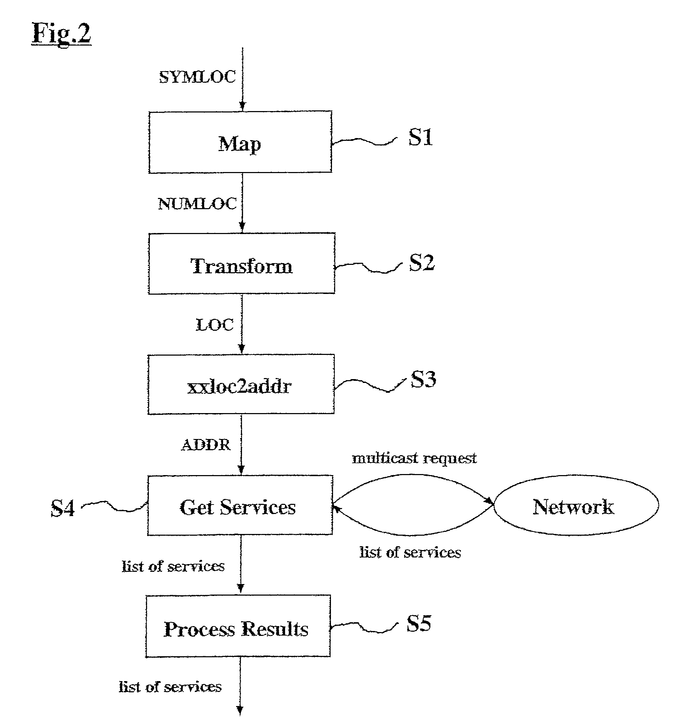

Usually, the initial situation is that a client (which might be just a subsystem within same application) gets a request (from a user) to determine the services at a certain location. If this is the case, a process is initiated, an example thereof now being explained with reference to Fig. 2:

In a first step S1, a symbolic location SYMLOC (for example the name of the city) is mapped to a numerical location specification NUMLOC: This can be accomplished using a table which maps symbolic locations to numerical locations. The table can be located on the host or on another host which is reachable by the network. Mapping may not be necessary if the location is already provided in a numerical format (if for example the location originates from a positioning system like GPS). In a second step S2, the numerical location specification NUMLOC is transformed to a canonical format LOC: This essentially means to transform a reference system used in conjunction with NUMLOC to a reference system used by the inventive communication system. In a third step S3, a function xxloc2addr is used to derive a multicast address from the location. If one or more areas are specified, the result will be a set of multicast addresses. The addresses are indicated here by "ADDR". In a fourth step S4, a multicast request for the actual services is issued: The client 2 uses ADDR to send out a multicast request to get location based services/information (e.g. the list of actually available services). In a fifth step S5, received services/information are collected by the client which have been sent by the servers. Then, the received information/services is/are processed/executed. Additionally, the client may filter the received information. This can be used to remove services which do not belong exactly to the specified location (compare discussion in conjunction with loc2srv) or to return only those services which belong to a certain type.

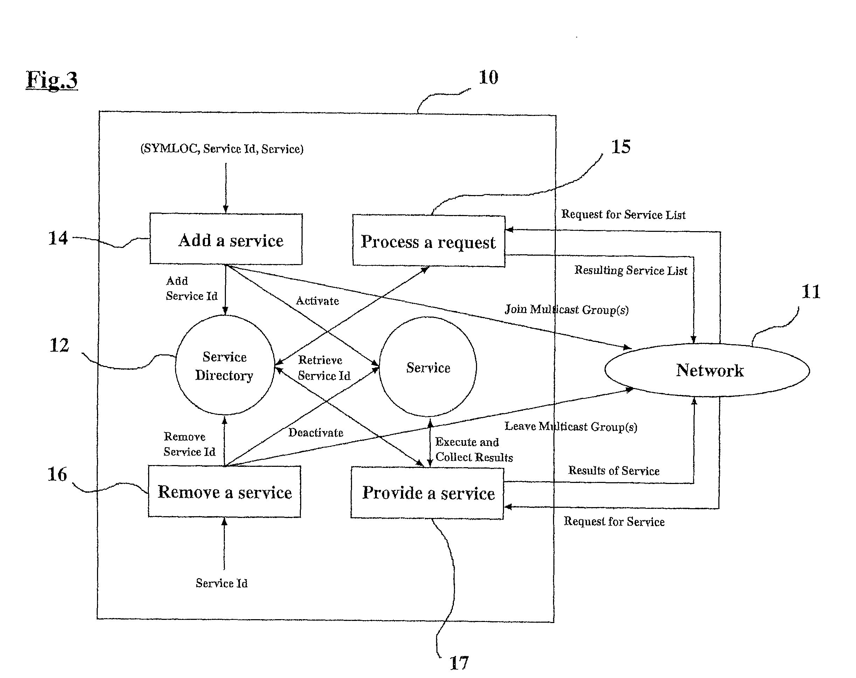

In the following description, making reference to Fig. 3, a preferred embodiment of a server usable in conjunction with the present invention as well as possible actions executable on said server will be discussed.

A server 10 (which corresponds to one of the first to n-th servers 5ₗ to 5ₙ) is connectable to a communication network 11. The server 10 comprises a service directory 12 and means for storing corresponding services 13. Further, the server 10 comprises means for adding a service 10, means for processing a request 15, means for removing a service 16 and means for providing a service 17.

The following four kinds of actions can be executed (concurrently) on the server:
1. Add a service: A new service can be added. The service has to be associated with one or more locations. For each of the locations, the server 10 has to join a respective multicast group using the function xxloc2srv - only if the server 10 has not joined the group before. The service will be included in the service directory 12. Finally, the service is activated. All these actions are performed by the means for adding a service 14.
2. Remove a service: The server 10 will leave all multicast groups which are associated with the service - when there are no further services associated with the group. Additionally, the service is removed from the service directory 12 and is deactivated. All these actions are performed by the means for removing a service 16.
3. Process a request for location based information: Location based information (e.g. the list of all services which are associated with a respective multicast address to which the request was sent) is returned. This is managed by the means for processing a request 15.
4. Provide a service (for the sake of convenience it is assumed that the actual service provision is also handled by the server 10, but it might also be located on another dedicated server): The actual service provision depends on the service technology. This could mean that the service itself is executed within the server 10, so that it is necessary to provide only the interface address to a service/information requesting client. Another alternative is that the service is executed within the client itself (for example using JAVA technology), so that the service code has to be transmitted to the client. Also hybrid technologies (the service is partly executed within the client and partly within the server 10) might be possible. These actions are managed by the means for providing a service 17.

The same protocol is possible for anycasting, i.e. if the client needs to know a single service provider in a certain location. Even a mixed mode can be realized. In this mode, a service can be associated with an anycast and/or a multicast address. It might even be desirable to make this transparent. The use of unicast addresses is possible, but there are no big advantages in relation to other solutions. This is because the services are to be related to a single server, whose address is the result of loc2srv. Of course, it is possible to use this server as a relay server. More appropriate seems to be the deployment in case of a homogeneous network where all servers are operated by the same network operator. Here, the approach would help to realize a load balancing of the servers.

In the following, it is discussed how to address services.

A service is in this context a - usually immobile - entity, which executes tasks on demand (e.g. like processing some transaction or controlling a device). For dealing with such a service, only the interface and/or protocol has to be known, not the entity which realizes the service. If you like to communicate with an HTTP server, you have to know the HTTP protocol, but not the actual server. Services in the internet are addressed using three parameters:
- The service type (e.g. HTTP)
- The host on which the service resides.
- A communication end-point on the host - usually called port.

It should be noted that the specification of the host might be symbolically or numerically. In the following discussion we will consider only numerical addresses, as symbolical addresses are mapped to numerical addresses anyway.
Further, the communication end-point might not be needed to be specified, because the service defines a default port. Due to this, the local addressing will be neglected and it will be concentrated on the global addressing.

Currently, most services are directly addressed - stating the name. This mode is called unicasting. It is also possible (though not used so often) to address services indirectly. The respective modes are called broadcasting, multicasting, and anycasting. In broadcasting all nodes of a network are addressed. As this generates a high communication cost, usually multicasting is used instead. In multicasting all nodes of a certain subset of the network are addressed. This is implemented in the internet associating multicasting addresses with groups. The nodes may join and leave any number of groups dynamically. In some cases not all nodes in a multicast group are needed, but just an arbitrary one (e.g. downloading a file which is hosted on a number of mirrors). This is the principle of anycasting. This discussion focuses on network addresses in the context of the Internet, but might also be applied to other networks.

In the following, it will be discussed how to specify locations.

In principle, locations can be specified symbolically and numerically. If a symbolic location is used, it will be mapped always to a numeric one. There are various schemes for specifying geographic locations. Important to note is that a location might designate a whole area. (This is actually typical for positioning considering the inaccuracies of positioning sensors.) We will extend this so far, that any closed set of areas (they do not have to have any holes) will be considered as a location.

In the following, an example will be given how the process of mapping locations to network addresses (mapping locations to services) which is executed within the client may be performed.

Locations are mapped to services using the function xxloc2srv. As it was explained above, it is assumed that the actual services and service types are determined in an extra step. This leaves the problem to get the network address to which the services are associated. For the following specification, we will use a mixture of mathematical notations and constructs borrowed from functional programming languages. It is to be noted that in this invention sets are used instead of lists - to avoid an implementation specific notation. But nevertheless, the given specifications can easily be transformed to programming language constructs.

The following definitions are used in the following description:
- Location - the set of locations. In the scope of this invention, it is a subset of p (Position) - the power set of positions. For practical purposes this can be restricted even further, so that Location is given as Location := Position x Position representing all up-right rectangles formed by the lower left edge and the upper right edge.
- Position - the set of positions. We will represent it as Position := GRS, where GRS := X x Y and X, Y arbitrary non-empty sets, is the coordinate system of a geographical reference system (e.g. WGS 84).
- AbsPosition - the abstracted set of positions usually a discrete space like a grid represented as AbsPosition := AbsX x AbsY.
- NetworkAddress - the set of network addresses. This is typically defined as NetworkAddress = Unicast Address U MulticastAddress U AnycastAddress where Unicast Address ∩ MulticastAddress = MulticastAddress ∩ AnycastAddress = Unicast Address ∩ AnycastAddress = {}. UnicastAddress is the set of all unicast addresses, MulticastAddress is the set of all multicast addresses, and AnycastAddress the set of all anycast addresses. Note, this is network dependent.

### Mapping one or more Locations

The addresses of sets of locations and locations are determined by the following maps (p (X) is the powerset of set X):
xxloc2srv: p (Location) → p (NetworkAddress)
xloc2srv: Location → p (NetworkAddress)

A straightforward solution for these maps is:
xxloc2srv s = { xloc2srv loc |loc ∈ s}
xloc2srv ((xMin, yMin), (xMax, yMax)) = {coord2addr (x,y) |
xabstract xMin =< x =< xabstract xMax,
yabstract yMin =< y =< yabstract yMax}

### Mapping a Position

The map for determining the related address of a single position is given by the function loc2srv:
loc2srv: Position → NetworkAddresss

For determining the actual address it is useful to split the function as follows: loc2srv := coord2addr o abstract (where o is the composition operator). The function abstract maps the continuous space to a discrete space. As we will see, it is possible to handle different densities (e.g. to have a higher resolution for urban regions). Nevertheless, in the resulting space all points are uniformly distributed. The second part of loc2srv, coord2addr, assigns these positions in the abstract space a network location. This splitting simplifies the handling of configuration issues on the position side and on the network address side as well. This means a service provider can for instance reduce the density of a particular area without the need to change the network configuration. Vice versa he may change network addresses without having to change anything in the abstraction part.

### Abstraction

The function abstract is given as:
abstract: Position → AbsPosition
abstract (x,y) := (xabstract x, yabstract y)
xabstract: X → AbsX
yabstract: Y → AbsY

The abstraction functions xabstract and yabstract can be defined on the basis of the generic function cabstract:
cabstract : C → AbsC
cabstract x = _cabstract x globalAbstract localAbstracts
_cabstract : C → (C → AbsC) → p(C x C x (C → AbsC)) → AbsC
_cabstract x globalAbstract {}= globalAbstract x
_cabstract x globalAbstract (xMin, xMax, localAbstract)∪ r =
   if xMin =< x =< xMax
   then localAbstract x
   else _cabstract x globalAbstract r
where globalAbstract, localAbstract : C → AbsC.
This function can easily be simplified if only a global linear abstraction is used (gl_cabstract) or - to enable different densities - local linear abstractions (11_abstract):
gl_abstract: C → AbsC
gl_abstract x = x DIV k

11_abstract: C → AbsC
11_abstract x = _11abstract x 11_localAbstracts

_11abstract: C → p (CxCxC) → AbsC
_11abstract x (xMin,xMax,k) ∪s =
   if (xMin x =< xMax)
   then x DIV k
   else _11abstract x s
DIV: C x C → AbsC

k (∈ C) is a constant which is chosen to transform the continuous space into a discrete space.

### The Mapping to the Network Address

The function coord2addr is used to map the abstract coordinate system to network addresses. The following definition serves as an example:
coord2addr : AbsX x AbxY → NetworkAddress
coord2addr pos = _coord2addr pos localAddrMaps

_coord2addr : AbsX x AbsY → p (CxCxNetworkAddress) → NetworkAddress
_coord2addr pos {} = ┴
_coord2addr (x1,y1) (x2,y2, addr)∪localMaps =
   if x1 = x2 ∧ y1 = y2
   then addr
   else _coord2addr (x,y) localMaps
┴ denotes the undefined result.

Also the service type or any other information that is related to the service can be included in the association. This would mean to map this information to one or more hash keys which are added as further dimensions to AbsC.

The following three scenarios demonstrate the method. First, we present a scenario for dealing with location-based services (LBS) in the context of the internet. Second, we show that it is also possible to use it in the context of other networks like broadcasting. Finally, in the third scenario the method is applied to distributed 3D systems.

### LBS in the Context of the Internet

Users access services in the context of the Internet usually via a browser. They are addressed using a URL. Also LBS can be realized using WWW-technology. What is needed is support to address these services using a location. A dedicated URL schema enables the addressing of locations. Such an address can then be mapped to an IP (multicast) address using the protocol described above. The request would be sent out and the results are collected by the browser and are presented to the user, so that he or she can select a service. In this context, there is no name server necessary which maps the locations to IP addresses.

### LBS in the Context of Broadcasting

In digital broadcasting system like DAB multiple services are delivered on a single frequency. The described method can be modified so that a location is mapped to one or more service identifies to offer LBS. It is even possible to address subsets of a service (like a Web page), so that it simplifies the service provision even more. In contrast to [5] it is not necessary to add the associated locations to the services itself, but that also means that the systems needs more maintenance, as the target addresses are computed.

### Distributed 3D Systems

In distributed 3D systems like Virtual Reality environments or multiplayer gaming systems, multiple data sources (containing the 3D model data) serve multiple sinks (usually 3D rendering engines). Two problems are significant in this scenario: how is the data be partitioned and how can the load of the server be shared? The method presented above enables both an easy partitioning and load sharing. A request issued by a rendering engine states a subspace the engine is interested in. This request is then mapped to one or more network addresses, from which the actual data is collected.

The discussed system provides a method to map locations to services without the need of a middle server. The discussion showed that it is best done using two steps if a flexible configuration is needed: first, the mapping of the geographical space to some abstracted discrete space and later on to the network address. The approach is best suited for addressing services in heterogeneous multicast (IP) networks, but can reasonably be adapted to other network types like unicast, anycast or broadcast networks.

References
[1] SoftWired AG: "iBus - Programmer's Manual", Version 0.5, August 10, 1998, http://www.softwired.ch, 1998.
[2] T. Imielinski and J.C. Navas: "GPS-Based Geographic Addressing, Routing and Resource Discovery". Communications of the ACM, Vol. 42, No. 4, p. 86-92, April 1999.
[3] S. Goel and T. Imielinski: "DataSpace - querying and monitoring deeply networked collections in physical space. Part II - Protocol Details". Technical Report DCS-TR-400, Department of Computer Science, Rutgers University, October 14, 1999, http://cereal.rutgers.edu/∼gsamir/techreport/dcs-tr-400.ps.gz, 1999.
[4] Y.-B. Ko and N. H. Vaidya: "Geocasting in Mobile Ad Hoc Networks: Location Based Multicast Algorithms". Proc. of the 2nd IEEE Workshop on Mobile Computer Systems and Applications, New Orleans, 1999.
[5] G. Müller: "System for deploying location-based services". European Patent Application No. 01129542.5

## Claims

1. Method of supplying location-based services/information offered by corresponding servers (5ₗ to 5ₙ) to a client (2) which is connectable to said servers (5ₗ to 5ₙ) via a communication network (4), wherein
- said client (2):
a) maps a location to at least one network address respectively associated with a part of said communication network (4),
b) sends a service/information request to said parts of said communication network (4) specified by said at least one network address,
- all of said servers (5₁ to 5ₙ) which are accessible via said at least one network address process said service/information request and send corresponding location-based services/information back to said client (2).

2. Method according to claim 1, **characterized in that** at least one of said network addresses obtained during said mapping process of step a) corresponds to a single node of said communication network (4), wherein a unicasting communication process is performed during step b) via said network address corresponding to said single node.

3. Method according to claim 1 or 2, **characterized in that** at least one of said network addresses obtained during said mapping process of step a) corresponds to a group of nodes of said communication network (4), wherein a multicasting communication process is performed during step b) via said network address corresponding to said group of nodes.

4. Method according to anyone of claims 1 or 3, **characterized in that** at least one of said network addresses obtained during said mapping process of step a) corresponds to a group of nodes of said communication network, wherein an anycasting communication process is performed during step b) via said address corresponding to said group of nodes.

5. Method according to anyone of claims 1 to 4, wherein step a) comprises a first step of mapping said location to an element of an abstracted discrete location space, and a second step of mapping said element to said at least one network address.

6. Method according to anyone of claims 1 to 5, wherein said location is defined by an exact geographical position and/or by a geographical area and/or by a set of geographical areas.

7. Method according to anyone of claims 1 to 6, wherein said communication network (4) is the Internet and said network addresses are IP-addresses.

8. Method according to anyone of claims 1 to 7, wherein said services comprise pure information and/or computer executable code.

9. Method according to anyone of claims 1 to 8, wherein said location is the current location of said client (2) itself which is obtained by user inputs and/or by processing an output of a positioning device (3).

10. Network capable client (2), comprising means for:
- mapping a location to at least one network address respectively associated with a part of a communication network (4) to which said client (2) is connectable,
- sending a service/information request to said parts of said communication network (4) specified by said at least one network address,
- receiving requested services/information via said communication network (4).

11. Network capable client (2) according to claim 10, **characterized by** positioning means (3) and/or position input means for supplying said client with location information.

12. Communication system (1) for handling location-based services/information, comprising:
- a network capable client (2) according to claim 10 or 11,
- at least one server (5ₗ to 5ₙ) which processes services/information requests and provides corresponding services/information,
- a communication network (4) connecting said network capable client (2) to said at least one server (5ₗ to 5ₙ), wherein
- said servers (5ₗ to 5ₙ) are addressable by said network capable client (2) via said network addresses being determined by said mapping process within said network capable client (2).

13. Computer program product comprising computer program means adapted to perform and/or to embody the method according to anyone of claims 1 to 9 and/or any step thereof when it is executed on a computer, a digital signal processor or the like.

14. Computer readable storage means adapted to store a computer program according to claim 13.
